# EUROPEAN PATENT SPECIFICATION

(11) **EP 0 883 531 B1**
(45) Date of publication and mention of the grant of the patent: **20.06.2001**
(21) Application number: 97906292.4
(22) Date of filing: 10.03.1997
(51) Int. Cl.: B60R 25/02

(54) **MOTOR VEHICLE ANTI-THEFT DEVICE**
DIEBSTAHLSICHERUNG FÜR EIN KRAFTFAHRZEUG
DISPOSITIF ANTIVOL POUR VEHICULE A MOTEUR

(30) Priority: 15.03.1996 GB 9605421
(43) Date of publication of application: 16.12.1998
(73) Proprietor: H. Young (Operations) Limited, Newbury, Berkshire RG14 5PX (GB)
(72) Inventor: JACKSON, Andrew, Surrey GU17 8BP (GB)
(74) Representative: Gold, Tibor Z.
(86) International application number: GB9700652
(87) International publication number: WO9734788

(56) References cited:
- DE-U- 29 505 744
- FR-A- 2 253 367
- GB-A- 2 286 162
- US-A- 5 024 069
- US-A- 5 097 685
- US-A- 5 299 438
- US-A- 5 359 869
- US-A- 5 426 960

## Description

This invention concerns anti-theft devices for locking onto a car steering wheel to prevent or limit the movement of the steering wheel.

Vehicle anti-theft devices in the form of steering wheel immobiliser bars are well-known, and the present invention is a development of one such device, which is the subject of our earlier GB-B-2,246.990.

GB-B-2,246,990 which comprises the features of the preamble of claim 1, discloses an anti-theft device, which comprises an immobiliser bar and a locking arrangement mounted at one end of the bar for locking the bar onto a steering wheel. According to this patent, the locking arrangement fastens onto one side of the rim of the steering wheel in use, and the immobiliser bar is arranged to extend over the hub of the steering wheel and to pass through and behind a portion of the steering wheel rim on the opposite side from that engaged by the locking arrangement. The locking arrangement comprises a base part attached to the immobiliser bar, a hinged cover pivotably mounted on the base part so as to be engageable around the rim of the steering wheel, and a spring-loaded latching arrangement for locking the cover in a closed position on the rim.

The design disclosed in our earlier patent has advantages in terms of the way in which the immobiliser bar engages the steering wheel because the bar is both difficult to remove and suits a wide variety of steering wheel designs. However, a more secure form of locking arrangement is considered desirable to meet current British standards.

Another form of anti-theft device is disclosed in US-A-5,024,069 and comprises an immobiliser bar having a pair of hook members rigidly fixed to the bar. A locking assembly is rotatable around the bar to and from a position in which it closes the entrances to the two hook members. In this position, when the hook members are engaged over the rim of a steering wheel, the locking assembly can be locked relative to the bar and the hook members in order to secure the bar and so that it projects tangentially from the steering wheel.

A disadvantage of the arrangement of this US patent is that the locking arrangement is cumbersome. Further, the immobiliser bar is engaged with the steering wheel only by the hook members and not by the bar itself so that security of attachment is reduced and some limited movement of the steering wheel still remains possible even when the anti-theft device is attached to the wheel.

It is an object of the present invention to produce an anti-theft device of the kind disclosed in GB-A-2,246,990 but having an improved locking arrangement.

The invention is thus applied to an anti-theft device comprising an immobiliser bar for fitting to steering wheel so as to project generally radially from the steering wheel to prevent or limit rotation thereof by contact with other parts of the vehicle, and a locking arrangement mounted at one end of the immobiliser bar for locking the immobiliser bar onto the rim of the steering wheel at one side thereof.

A further object of the present invention at least in its preferred form is to provide an anti-theft device which is versatile and suitable for use in a wide variety of vehicles and which has a secure and rigid locking arrangement for mounting the device on a steering wheel.

According to the present invention, there is provided an anti-theft device of the kind mentioned above, which is characterised in that the locking arrangement comprises a pair of hooks pivotally connected to the immobiliser bar for movement around an axis perpendicular to the immobiliser bar between an open position in which the free ends of the hooks are remote from the bar for engaging over the steering wheel rim and a closed position in which the free ends of the hooks lie adjacent the immobiliser bar for securing the immobiliser bar onto the steering wheel rim, and a locking assembly for rigidly engaging the free ends of the hooks to secure the hooks in the closed position, and in that the arrangement is such that the hooks in the closed position have their free ends engaged on one side of the immobiliser bar and their elbows lying facing the opposite side of the immobiliser bar.

In a preferred embodiment of the invention, the pair of hooks are formed by two prongs of a unitary fork element.

Preferably also, the unitary fork element is pivotably connected to the immobiliser bar by means of a sleeve rigidly attached to one end of the bar immobiliser.

The locking assembly may comprise first and second locking pin assemblies, each for engaging a notch in a respective one of the free ends and each comprising a lock pin engageable with the associated notch, a lock element moveable axially relative to the lock pin and resiliently biased in a direction away from the lock pin, and a cam lock arranged to engage the lock element and force it against the lock pin so as to rigidly engage the lock pin with the associated notch.

In the embodiment described below, the lock pin constitutes a closed outer sleeve, and the lock element constitutes an inner pin slidable within the outer sleeve.

The invention is described further, by way of example, with reference to the accompanying drawings, in which:
Figure 1 is a perspective view of an anti-theft device according to the present invention;
Figure 2 is a perspective view of the anti-theft device with parts broken away to show a locking arrangement of the device;
Figure 3 is a partial side view showing a hook of the locking arrangement and its mounting relative to an immobiliser bar of the device;
Figure 4 is an axial view along the immobiliser bar partly in section, showing details of a locking assembly of the locking arrangement; and
Figure 5 is a section through a portion of the locking assembly, showing in Figure 5a the locking assembly in a latched position and showing in Figure 5b the locking assembly in a deadlock position.

Referring to the drawings, an anti-theft device according to the present invention comprises an immobiliser bar 10 and a locking arrangement 12 mounted at one end of the immobiliser bar 10. The immobiliser bar 10 has a curved and slightly S-shaped configuration so that when the locking arrangement 12 is secured to the rim of a steering wheel at one side thereof the immobiliser bar 10 extends across the hub of the steering wheel and then through the steering wheel to engage behind the rim at the opposite side thereof. These features are described in our GB-B-2,246,990. In this position, the free end of the immobiliser bar 10 projects generally radially beyond the steering wheel in use and prevents or limits rotation of the steering wheel by contact with other parts of the vehicle.

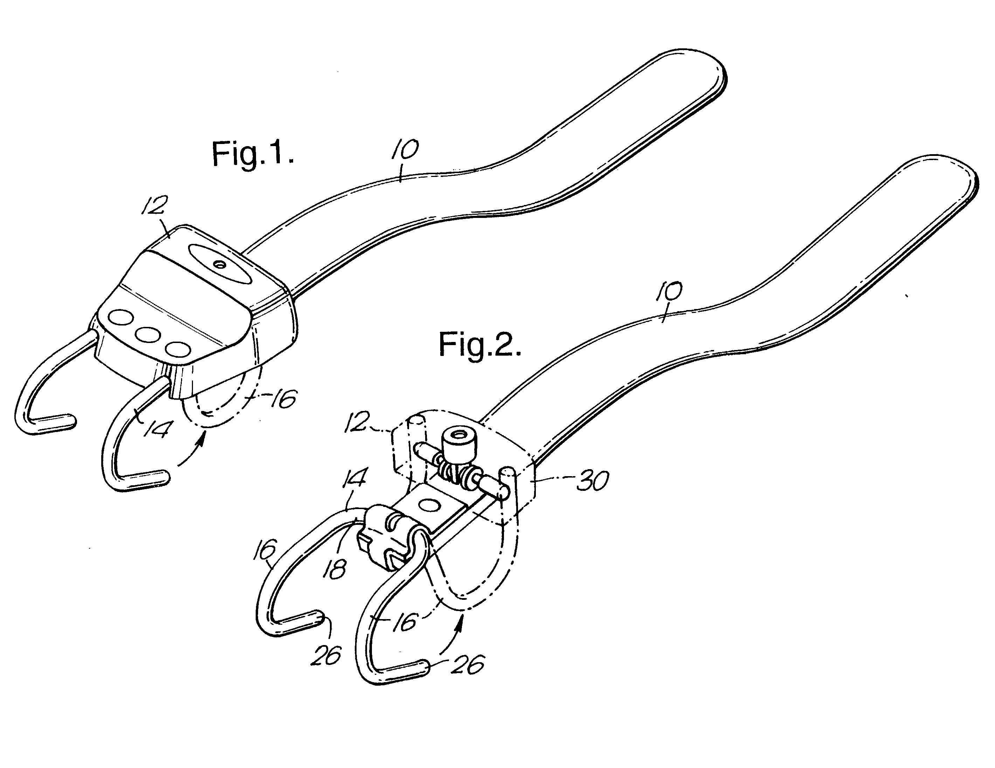

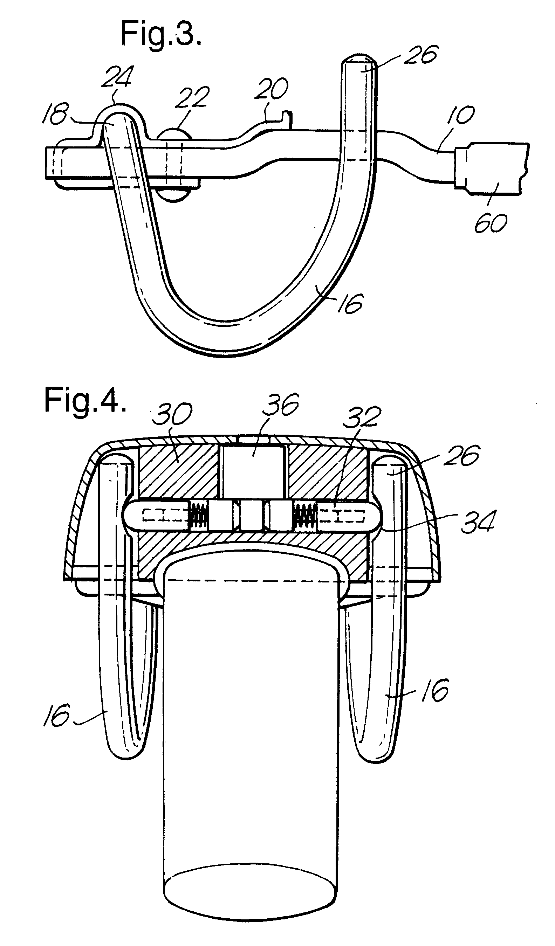

As shown in Figures 1 and 2, the locking arrangement 12 comprises a unitary fork element 14 having a pair of hooked prongs 16 joined by a cross bar 18. The fork element 14 is made from substantial spring steel so that it cannot readily be severed by thieves. The fork element 14 is mounted relative to the immobiliser bar 10 so that it can pivot about an axis which lies perpendicular to the longitudinal axis of the immobiliser bar 10. In other words, the hooks 16 are pivotable about an axis which coincides with the axis of the cross bar 18. Such mounting of the fork element 14 is achieved by means of a U-shaped member 20, shown in Figure 3, formed from hardened mild steel and slotted over the end of the immobiliser bar 10 and bolted onto the bar 10 by means of a bolt 22. The U-shaped member 20 is formed with a sleeve 24 which receives the cross bar 18 of the fork element 14 in a snug fitting relationship.

Consequently, the fork element 14 is pivotable between an open position in which free ends 26 of the hooks 16 are located remote from the immobiliser bar 10 and a closed position in which the free ends 26 of the hooks 16 extend past the immobiliser bar 10. Both positions are shown in Figures 1 and 2 and the closed position is shown in Figure 3. As shown in Figure 3 in the closed position the hooks 16 have their free ends 26 engaged on one side of the immobiliser bar 10 while their elbows lie facing the opposite side of the immobiliser bar 10. Further the cross bar 18 sits against said one side of the bar 10.

In the open position of the fork element 14, the immobiliser bar 10 can be fitted through a vehicle steering wheel so that its two ends engage opposite faces of the steering wheel rim on opposite sides of the steering wheel hub. In this condition, the hooks 16 very loosely engage the steering wheel. By then moving the fork element 14 into the closed position, the hooks 16 are firmly engaged with the steering wheel rim to fix the immobiliser bar to the steering wheel.

A locking assembly 30, shown in Figures 2, 4 and 5, is included in the locking arrangement 12 for rigidly securing the fork element 14 in the closed position. As shown, the locking assembly 30 comprises first and second locking members 32, each of which is engageable within a respective notch 34 provided in the free end 26 of an associated one of the hooks 16. The two locking members are controlled by a cam lock 36. Only one of the locking members will be described.

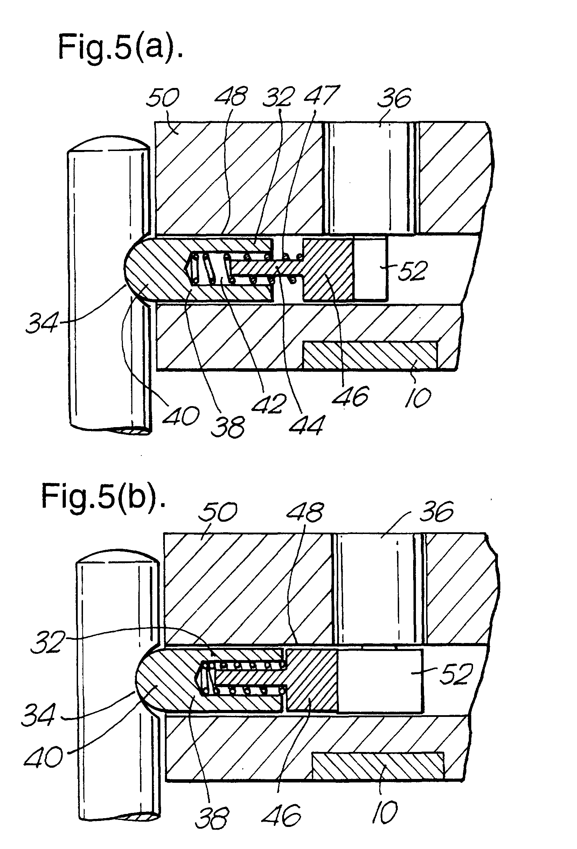

Referring principally to Figures 5a and 5b, the respective locking member 32 comprises a lock pin 38 having a rounded tip 40 of complementary shape to the associated notch 34 and having also a female opening 42. The locking member 32 further comprises a male lock element 44 received within the female opening 42. The male lock element 44 has a head 46, and a spring 47 is provided between the head 46 and the interior of the lock pin 38 to bias the two apart. The locking member 32 is guided within a bore 48 in a housing 50 so that the rounded tip 40 of the lock pin 38 projects laterally beyond the housing 50.

The fork element 14 is designed so that the two hooks 16 in the closed position sit on either side of the housing 50 and, as each hook 16 is moved into the closed position, it slides past the lock pin 38 depressing it against the force of the spring 47 until the notch 34 is aligned with the lock pin 38. Then, the rounded tip 40 springs into the notch 34 to hold the hook 16 in this position. This is the latched position of the locking member 32 and it is shown in detail in Figure 5a.

The cam lock 36 is rotatably mounted in the housing 50 so that a cam member 52 of the cam lock 36 projects into the bore 48 behind the head 46 of the locking member 32. In the latched position shown in Figure 5a, the cam member 52 does not bear against the head 46.

However, when the cam lock 36 is turned, the cam member 52 gradually and increasingly bears against the head 46 to urge the male lock element 44 right into the female opening 42 of the lock pin 38. The head 46 is thus forced against the end of the lock pin 38 and the two pans of the locking member 32 rigidly engage one another to fix the rounded tip 40 in the notch 34. This is the deadlock position shown in Figure 5b and in this position no movement of parts of the locking member 32 relative to one another or of the locking member 32 relative to the notch 34 is possible. Consequently, the hook 16 is rigidly secured in the closed position. Release of the fork element 14 is only possible by operation of the cam lock 36 followed subsequently by snapping the locking member 32 out of the notch 34.

The immobiliser bar 10 shown in Figures 1 to 3 is encased within a polyurethane foam cover 60. This cover stops just short of the housing 50 and the bar 10 is attached to the housing 50 by means of rivets (not shown). The seating of the bar 10 without its cover in the housing 50 is shown in section in Figures 5a and 5b.

The present invention has the advantage of providing a robust and easy to operate anti-theft device. For added security, the two hooks 16 can be engaged with the steering wheel rim on either side of a radial spoke of the steering wheel to provide a tamper-proof arrangement in which disengagement of the immobiliser bar 10 from the steering wheel by unnatural means would require severing of the steering wheel rim or of the hooks 16 in more than one position.

## Claims

1. An anti-theft device for motor vehicles, comprising an immobiliser bar (10) for fitting to a steering wheel so as to project generally radially from the steering wheel to prevent or limit rotation thereof by contact with other parts of the vehicle, and a locking arrangement (12) mounted at one end of the immobiliser bar for locking the immobiliser bar onto the rim of the steering wheel at one side thereof, characterised in that the locking arrangement comprises a pair of hooks (16) pivotally connected to the immobiliser bar for movement around an axis perpendicular to the immobiliser bar between an open position in which the free ends (26) of the hooks are remote from the bar for engaging over the steering wheel rim and a closed position in which the free ends of the hooks lie adjacent the immobiliser bar for securing the immobiliser bar onto the steering wheel rim, and a locking assembly (30) for rigidly engaging the free ends of the hooks to secure the hooks in the closed position, and in that the arrangement is such that the hooks in the closed position have their free ends engaged on one side of the immobiliser bar and their elbows lying facing the opposite side of the immobiliser bar.

2. An anti-theft device according to claim 1 wherein the pair of hooks are formed by two prongs of a unitary fork element (14).

3. An anti-theft device according to claim 2 wherein a sleeve (24) is rigidly attached to one end of the immobiliser bar, and in that a cross bar (18) of the unitary fork element is received within the sleeve for pivotably connecting the unitary fork element to the immobiliser bar.

4. An anti-theft device according to claim 1, 2 or 3, characterised in that the pivot axis from the hooks lies on the said one side of the immobiliser bar.

5. An anti-theft device according to any preceding claim wherein the locking assembly comprises first and second locking pin assemblies (38, 44) arranged respectively to engage notches (34) in the free ends of the hooks.

6. An anti-theft device according to claim 5, wherein each locking pin assembly comprises a lock pin (38), a lock element (44) moveable axially relative to the lock pin and resiliently biased in a direction away from the lock pin, and means (36) for forcing the lock element and the lock pin into rigid engagement with one another and within the associated notch in the free end of the respective hook.

7. An anti-theft device according to claim 6 wherein each locking pin assembly (38, 44) is engageable within the associated notch (34) in a latching position when the lock pin (38) and the lock element (44) are resiliently biased away from one another and in a locking position when the lock pin (38) and the lock element (44) are rigidly engaged with one another.

8. An anti-theft device according to claim 6 or 7 wherein the lock pin constitutes a closed outer sleeve (40, 42), the lock element constitutes an inner pin (44, 46) slideable within the outer sleeve, and the lock pin is engageable within the associated notch (34) while the lock element is engageable by the means (36) for forcing the lock element against the lock pin.

## Patentansprüche

1. Eine Antidiebstahlvorrichtung für Motorfahrzeuge, mit einem Blockierstab (10) zur Befestigung an einem Lenkrad, so dass er im wesentlichen radial von dem Lenkrad vorspringt, um dessen Drehung durch Kontakt mit anderen Teilen des Fahrzeuges zu verhindern oder zu begrenzen, und mit einer Verriegelungsanordnung (12), die an einem Ende des Blockierstabes angebracht ist, um den Blockierstab auf dem Kranz eines Lenkrades an einer Seite davon zu verriegeln,
dadurch gekennzeichnet,
dass die Verriegelungsanordnung ein Paar von Haken (16) aufweist, die schwenkbar mit dem Blockierstab verbunden sind für eine Bewegung um eine Achse, die senkrecht zu dem Blockierstab ist, zwischen einer offenen Stellung, in der die freien Enden (26) der Haken entfernt sind von dem Stab zur Verbindung über den Lenkradkranz, und einer geschlossenen Stellung, in der die freien Enden der Haken an dem Blockierstab anliegend liegen, um den Blockierstab auf dem Lenkradkranz zu befestigen, und einer Schlossanordnung (30) zum starren Halten der freien Enden der Haken, um die Haken in der geschlossenen Position zu sichern, wobei die Anordnung so ist, dass die Haken in der geschlossenen Position ihre freien Enden an einer Seite des Blockierstabes verbunden haben und ihre Ellbogen der gegenüberliegenden Seite des Blockierstabes gegenüberliegend liegen.

2. Eine Antidiebstahlvorrichtung gemäß Anspruch 1,
wobei das Paar von Haken gebildet ist durch zwei Zinken eines einheitlichen Gabelelementes (14).

3. Eine Antidiebstahlvorrichtung gemäß Anspruch 2,
wobei eine Manschette (24) fest an einem Ende des Blockierstabes befestigt ist und wobei eine Querstange (18) des einheitlichen Gabelelementes innerhalb der Manschette aufgenommen wird, um das einheitliche Gabelelement schwenkbar mit dem Blockierstab zu verbinden.

4. Eine Antidiebstahlvorrichtung gemäß den Ansprüchen 1, 2 oder 3,
dadurch gekennzeichnet,
dass die Schwenkachse der Haken auf der besagten einen Seite des Blockierstabes liegt.

5. Eine Antidiebstahlvorrichtung gemäß einem der vorhergehenden Ansprüche, wobei die Schlossanordnung erste und zweite Schließstiftanordnungen (38, 44) enthält, die entsprechend angeordnet sind, um sich mit Kerben (34) in den freien Enden der Haken zu verbinden.

6. Eine Antidiebstahlvorrichtung gemäß Anspruch 5,
wobei jede Schließstiftanordnung einen Verriegelungsstift (38) aufweist, ein Schlosselement (44), das relativ zu dem Verriegelungsstift axial beweglich ist und in einer Richtung weg von dem Verriegelungsstift elastisch vorgespannt ist, sowie Mittel (36), um das Schlosselement und den Verriegelungsstift in starre Verbindung miteinander und in die zugeordnete Kerbe im freien Ende des entsprechenden Hakens zu zwingen.

7. Eine Antidiebstahlvorrichtung gemäß Anspruch 6,
wobei jede Schließstiftanordnung (38, 44) innerhalb der zugeordneten Kerbe (34) in einer Einschnappstellung verbindbar ist, wenn der Verriegelungsstift (38) und das Schlosselement (44) in der Richtung weg voneinander elastisch vorgespannt sind, und in einer Verriegelungsstellung, wenn der Verriegelungsstift (38) und das Schlosselement (44) miteinander fest verbunden sind.

8. Eine Antidiebstahlvorrichtung gemäß Anspruch 6 oder 7,
wobei der Verriegelungsstift eine geschlossene äußere Manschette (40, 42) aufweist und wobei das Schlosselement einen inneren Stift (44, 46) aufweist, der innerhalb der äußeren Manschette verschiebbar ist, und wobei der Verriegelungsstift einrastbar ist mit der zugeordneten Kerbe (34), während das Schlosselement einrastbar ist durch die Mittel (36), um das Schlosselement gegen den Verriegelungsstift zu zwingen.

## Revendications

1. Dispositif antivol pour véhicules à moteur, constitué d'une barre d'immobilisation (10) destinée à s'adapter à un volant de manière à faire généralement saillie radialement depuis le volant pour interdire ou limiter la rotation de celui-ci par contact avec d'autres parties du véhicule, et d'un dispositif de verrouillage (12) monté à une extrémité de la barre d'immobilisation pour verrouiller la barre d'immobilisation sur le cercle du volant d'un côté de celui-ci,
caractérisé en ce que le dispositif de verrouillage est constitué d'une paire de crochets (16) montés pivotants sur la barre d'immobilisation pour se déplacer autour d'un axe perpendiculaire à la barre d'immobilisation entre une position ouverte, dans laquelle les extrémités libres (26) des crochets sont éloignées de la barre pour venir en prise sur le cercle du volant, et une position fermée, dans laquelle les extrémités libres des crochets se trouvent adjacentes à la barre d'immobilisation pour fixer la barre d'immobilisation sur le cercle du volant, et d'un ensemble de verrouillage (30) adapté à venir en prise rigide avec les extrémités libres des crochets pour immobiliser les crochets en position fermée, ledit dispositif étant, en outre, caractérisé en ce qu'il est tel que les crochets, en position fermée, ont leurs extrémités libres en prise avec une face de la barre d'immobilisation et leurs parties coudées en vis-à-vis de la face opposée de la barre d'immobilisation.

2. Dispositif antivol selon la revendication 1, dans lequel la paire de crochets est formée de deux pointes d'un éléments unitaire en fourche (14).

3. Dispositif antivol selon la revendication 2, dans lequel un manchon (24) est rigidement fixé à une extrémité de la barre d'immobilisation, et caractérisé en ce qu'une traverse (18) de l'élément unitaire en fourche est reçue au sein du manchon pour connecter, de manière pivotante, l'élément unitaire en fourche à la barre d'immobilisation.

4. Dispositif antivol selon la revendication 1, 2 ou 3, caractérisé en ce que l'axe de pivotement duquel dépendent les crochets s'étend sur ladite une face de la barre d'immobilisation.

5. Dispositif antivol selon l'une quelconque des revendications précédentes, dans lequel l'ensemble de verrouillage est constitué d'un premier et d'un second ensembles à goupille de verrouillage (38, 44) disposé de manière à venir en prise avec des entailles respectives (34) ménagées dans les extrémités libres des crochets.

6. Dispositif antivol selon la revendication 5, dans lequel chaque ensemble à goupille de verrouillage est constitué d'une goupille de verrouillage (38), d'un élément de verrouillage (44) déplaçable axialement par rapport à la goupille de verrouillage et sollicité élastiquement à l'écart de la goupille de verrouillage, et d'un moyen (36) pour contraindre l'élément de verrouillage et la goupille de verrouillage à venir en prise rigide l'un avec un autre et à l'intérieur de l'entaille associée mébagée dans l'extrémité libre du crochet respectif.

7. Dispositif antivol selon la revendication 6, dans lequel chaque ensemble à goupille de verrouillage (38, 44) est susceptible de venir en prise avec l'entaille associée (34) dans une position enclenchée lorsque la goupille de verrouillage (38) et l'élément de verrouillage (44) sont sollicités élastiquement à l'écart l'un de l'autre et dans un position de verrouillage lorsque la goupille de verrouillage (38) et l'élément de verrouillage (44) sont en prise rigide l'un avec l'autre.

8. Dispositif antivol selon la revendication 6 ou 7, dans lequel la goupille de verrouillage constitue un manchon externe fermé (40, 42), l'élément de verrouillage constitue une goupille interne (44, 46) pouvant coulisser à l'intérieur du manchon externe, et la goupille de verrouillage peut venir en prise avec l'entaille associée (34) tandis que l'élément de verrouillage peut venir en prise avec le moyen (36) prévu pour contraindre l'élément de verrouillage à venir contre la goupille de verrouillage.
